# EUROPÄISCHE PATENTANMELDUNG

(11) **EP 0 565 765 A2**
(43) Veröffentlichungstag der Anmeldung: **20.10.1993**
(21) Anmeldenummer: 92107520.6
(22) Anmeldetag: 04.05.1992
(51) Int. Cl.: G02B 5/128, E01F 9/08

(54) **Reflexionskörper, insbesondere für Strassenmarkierungen**

(30) Priorität: 17.04.1992 DE 9205350 U
(71) Anmelder: SWARCO VESTGLAS Vestische Strahl- und Reflexglas GmbH, D-45659 Recklinghausen (DE)
(72) Erfinder: Swarovski, Manfred, A-6112 Wattens/Tirol (AT); Kill, Werner, Dipl.-Ing., W-4200 Oberhausen 11 (DE); Fasching, Karl-Heinz, A-3372 Sankt Georgen (AT)
(74) Vertreter: Türk, Gille, Hrabal, Leifert

(57) **Zusammenfassung**

Es ist ein Reflexionskörper (1; 5) für Straßenmarkierungen (9) offenbart, der einen granalienartigen, kornartigen oder plättchenartigen elastischen Träger (2; 6) aufweist, welcher mit einer Beschichtung (3; 7) aus mikrofeinen Glasperlen (4; 8) versehen ist.

## Beschreibung

Die Erfindung betrifft einen insbesondere für Straßenmarkierungen bestimmten Reflexionskörper, der von den Scheinwerfern über die Straße fahrender Fahrzeuge ausgehendes Licht reflektiert, um die Straßenmarkierung bei Nacht besser sichtbar zu machen.

Es ist bekannt, in Straßenmarkierungen, welche beispielsweise auf die Fahrbahndecke aufgetragen werden, Reflexionskörper in Form von Glasperlen einzulassen, beispielsweise, indem man sie auf die frisch aufgebrachte Straßenmarkierung aufstreut und in die Markierung einsinken läßt, bevor dieselbe erstarrt bzw. aushärtet. Verwendet man hierzu sogenannte Micro-Glasperlen, d. h. Glaskügelchen mit sehr kleinem Durchmesser, so erzielt man zwar eine gute Haftung der Glasperlen am bzw. im Material der Straßenmarkierung, jedoch ergibt sich der Nachteil, daß bei nasser und insbesondere regennasser Fahrbahn die aus der Oberfläche der Straßenmarkierung herausragenden Glasperlen unter dem sich auf der Fahrbahn bildenden Wasserfilm verschwinden und somit die Retroreflexion des einfallenden Lichtes eines Fahrzeuges stark verringert oder ganz unterbunden wird. Da bei regennasser Fahrbahn die Fahrbahndecke noch dunkler erscheint, werden Straßenmarkierungen mit darin eingelassenen Micro-Glasperlen bei Regen insgesamt weitgehend unsichtbar.

Versieht man die Oberfläche von Straßenmarkierungen hingegen mit größeren Glasperlen als Reflexionskörper, die einen so großen Durchmesser haben, daß sie über den sich auch bei starkem Regen auf der Fahrbahn bildenden Wasserfilme vorstehen, so ergibt sich der Nachteil, daß derartige Glasperlen verhältnismäßig bald vom Untergrund gelockert und von den Reifen der darüber fahrenden Fahrzeugen aus dem Material der Straßenmarkierung herausgerissen werden. Dementsprechend sind mit derartigen großen Glaskugeln als Reflexionskörper ausgestattete Straßenmarkierungen auch nicht lange haltbar, sondern werden nach verhältnismäßig kurzer Zeit insbesondere bei Regen weitgehend unsichtbar.

Der Erfindung liegt die Aufgabe zugrunde, einen Reflexionskörper zu schaffen, der insbesondere für Straßenmarkierungen wie auf die Asphaltdecke oder Fahrbahndecke der Straße aufzutragenden Markierungen geeignet ist und auch bei regennasser Fahrbahn eine gute Reflexion des von den Scheinwerfern der über die Straße fahrenden Fahrzeuge ausgehenden Lichtes gewährleistet und der dauerhaft ist bzw. lange Betriebszeiten gewährleistet.

Diese Aufgabe wird erfindungsgemäß mit einem Reflexionskörper der eingangs genannten Gattung gelöst, welcher die Merkmale des kennzeichnenden Teiles des Anspruches 1 aufweist. Vorteilhafte Ausgestaltungen und Weiterbildungen der Erfindung sind Gegenstand der Unteransprüche.

Erfindungsgemäße Reflexionskörper bilden eine Art Granulat, bei dem Kerne oder Träger aus thermoplastischem Kunststoff mit einer stabilen Umhüllung von Microglasreflexperlen versehen sind. Wenn man derartige Reflexionskörper in Straßenmarkierungen einläßt, erhöhen die über die freie Oberfläche der Straßenmarkierung überstehenden Microglasreflexperlen der einzelnen granulatartigen Reflexionskörper die Retroreflexion der Markierung, besonders auch bei nasser Fahrbahn und bei Dunkelheit.

Die erfindungsgemäßen Reflexionskörper sind durch einen speziellen Aufbau des Gefüges in der Markierungsschicht Multiretroreflektoren und gewährleisten eine komplexe Lösung der Probleme moderner Markiersysteme. Mittels der erfindungsgemäßen Reflexionskörper ist ein optimiertes Gefüge von Microglasreflexperlen und thermoplastischen Trägerkörpern gewährleistet, was eine elastische und langzeitstabile Straßenmarkierung ermöglicht.

Die erfindungsgemäßen Reflexionskörper können in verschiedener Weise praktisch eingesetzt werden. So sind sie beispielsweise als Nachstreugranulat in Dauermarkierungen geeignet. Vorteilhafterweise werden sie in speziellen Markierungsmaterialien mit einer Schichtdicke ab 800 µ eingesetzt, so daß die in ihrem größten Durchmesser bis zu 2 mm dicken Reflexionskörper stets ausreichend weit über die Oberfläche der Straßenmarkierungen vorstehen, um auch dann noch sichtbar zu sein und das Licht von herannahenden Fahrzeugen reflektieren zu können, wenn die Straße bzw. Fahrbahn feucht oder naß ist und sich auf ihr ein Wasserfilm befindet. Dies hat insbesondere bei Dunkelheit erhebliche Vorteile für die Fahrer.

In der Zeichnung ist ein Ausführungsbeispiel eines erfindungsgemäßen Refexionskörpers schematisch dargestellt, und zwar zeigt
- Fig. 1: einen Schnitt eines derartigen Reflexionskörpers in stark vergrößertem Maßstab,
- Fig. 2: einen Schnitt ähnlich wie in Fig. 1, wobei der einen Kern bildende, aus thermoplastischem Material bestehende Träger des Reflexionskörpers auch im Inneren Micro-Glasperlen enthält, und
- Fig. 3: einen Schnitt wie in Fig. 1 und 2 eines erfindungsgemäßen Reflexionskörpers, der in eine auf eine Fahrbahndecke aufgetragene Straßenmarkierung eingelassen ist.

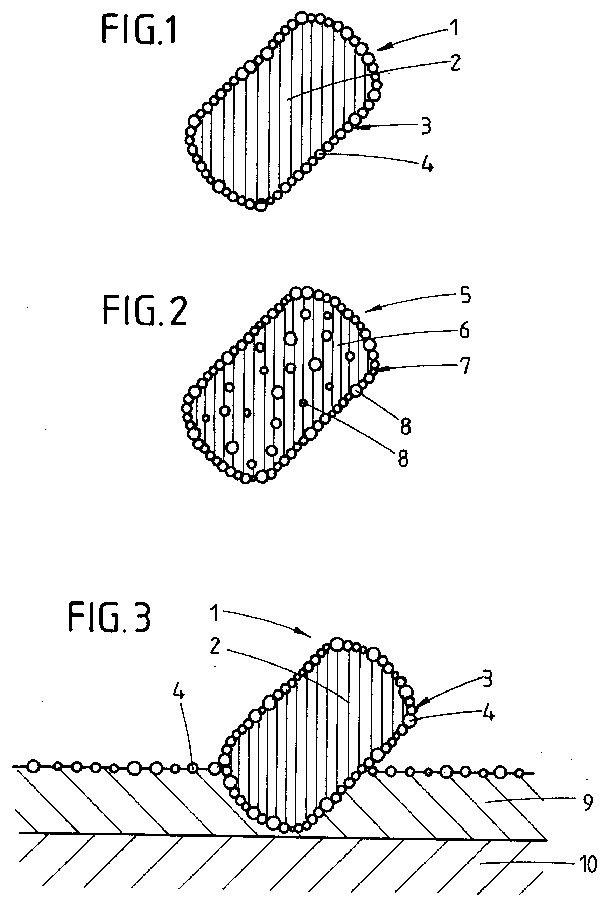

Der in Fig. 1 dargestellte Reflexionskörper 1 hat einen einen Kern bildenden Träger 2 aus thermoplastischem Material, der mit einer Umhüllung 3 aus einer Vielzahl von Micro-Glasperlen 4 versehen ist.

Der in Fig. 2 dargestellte Reflexionskörper 5 hat ebenfalls einen einen Kern bildenden Träger 6, auf dem sich eine Umhüllung 7 aus Micro-Glasperlen 8 befindet. Dieser Reflexionskörper unterscheidet sich von dem Reflexionskörper gemäß Fig. 1 dadurch, daß der aus thermoplastischem Material bestehende Träger 6 auch im Inneren Micro-Glasperlen 8 enthält, d. h. mit Micro-Glasperlen gefüllt ist. Wenn die die Oberfläche dieses Reflexionskörpers 5 bildende Umhüllung 7 abgetragen ist und der Träger selbst auch weiter abgetragen wird, liegen stets Micro-Glasperlen 8 in ausreichender Menge an der Oberfläche, um die gewünschte Retroreflexion zu gewährleisten.

Fig. 3 zeigt, wie ein Refelexionskörper 1 in einer dünnschichtigen Straßenmarkierung 9, welche sich auf einer aus Asphalt bestehenden Fahrbahndecke 10 einer Straße befindet, verankert ist. Dabei ist erkennbar, daß die aus Micro-Glasperlen 4 bestehende Umhüllung 3 des Reflexionskörpers 1 weiter über die Oberfläche der Straßenmarkierung 9 übersteht als auf die Straßenmarkierung 9 aufgestreute Micro-Glasperlen 4, die zwischen auf die Straßenmarkierung 9 aufgebrachten Reflexionskörpern 1 bzw. 5 zusätzlich auf der Oberfläche der Straßenmarkierung 9 vorgesehen sein können.

Ebenso wie die Darstellungen in Fig. 1 und 2 ist die Darstellung in Fig. 3 im Maßstab übertrieben, um die Anordnung der Reflexionskörper 1 auf bzw. in einer Straßenmarkierung 9 besser sichtbar zu machen. Die Reflexionskörper 1 bzw. 5 brauchen auch nicht die in der Zeichnung erkennbare längliche Form aufweisen. Vielmehr ist jede andere räumliche Gestalt der Reflexionskörper denkbar. Entscheidend ist, daß auf einem aus thermoplastischem Material bestehenden Träger Micro-Glasperlen vorgesehen sind, die deutlich über der Oberfläche einer Straßenmarkierung 9 liegen.

Die Reflexionskörper 1 bzw. 5 werden vorzugsweise auf die Oberfläche einer Straßenmarkierung 9 aufgeschüttet, bevor diese fest geworden bzw. erstarrt ist, damit diese Reflexionskörper in der in Fig. 3 anhand eines einzigen Reflexionskörpers gezeigten Weise in die Straßenmarkierung 9 einsinken können.

Der Abstand zwischen benachbarten Reflexionskörpern 1 bzw. 5 an bzw. auf einer Straßenmarkierung 9 ist beliebig und kann daher willkürlich sein, so daß man eine Vielzahl derartiger Reflexionskörper auf die Oberfläche der Straßenmarkierung aufschütten und damit an dieser anbringen kann.

Da die Reflexionskörper 1 bzw. 5 jeweils mit einer Umhüllung 3 bzw. 7 aus mikrofeinen Glasperlen versehen sind, haben sie keine glatte, sondern eine griffige Oberfläche, so daß sie sozusagen formschlüssig und damit dauerhaft in der Straßenmarkierung verankert werden können.

## Patentansprüche

1. Reflexionskörper (1; 5), insbesondere für Straßenmarkierungen (9), **dadurch gekennzeichnet,**
daß er einen granalienartigen, kornartigen oder plättdchenartigen elastischen Träger (2; 6) aufweist, der mit einer Beschichtung (3; 7) aus mikrofeinen Glasperlen (4; 8) versehen ist.

2. Reflexionskörper nach Anspruch 1, dadurch gekennzeichnet, daß der Träger (2; 6) aus thermoplastischem Kunststoff wie Polyäthylen oder Polypropylen oder aus thermoplastischen Straßenmarkierungsmaterialien besteht.

3. Reflexionskörper nach Anspruch 1 oder 2, dadurch gekennzeichnet, daß die Glasperlen (4; 8) in den Träger (2; 6) an dessen Oberfläche eingelassen sind.

4. Reflexionskörper nach Anspruch 3, dadurch gekennzeichnet, daß die Glasperlen (4; 8) in die Oberfläche des erwärmten Trägers (2; 6) eingesunken sind.

5. Reflexionskörper nach einem der Ansprüche 1 bis 4, dadurch gekennzeichnet, daß der Träger (6) von mikrofeinen Glasperlen (8) durchsetzt ist.

6. Reflexionskörper nach einem der Ansprüche 1 bis 5, dadurch gekennzeichnet, daß er einen größten Durchmesser bis zu 2 mm aufweist.
